# EUROPÄISCHE PATENTANMELDUNG

(11) **EP 0 559 014 A1**
(43) Veröffentlichungstag der Anmeldung: **08.09.1993**
(21) Anmeldenummer: 93102608.2
(22) Anmeldetag: 19.02.1993
(51) Int. Cl.: G01D 5/26, G01C 9/12

(54) **Positionsüberwachungseinrichtung**

(30) Priorität: 29.02.1992 DE 9202662 U
(71) Anmelder: HÖBEL GmbH, D-47443 Moers (DE)
(72) Erfinder: Höbel, Karl-Heinz, W-4130 Moers (DE)
(74) Vertreter: Paul, Dieter-Alfred, Dipl.-Ing.

(57) **Zusammenfassung**

Eine Positionsüberwachungseinrichtung, insbesondere für eine Schiffsverladeeinrichtung, weist mindestens einen Drehmelder auf, der mit einer Auswerteeinheit verbindbar oder verbunden ist. Damit die Positionsüberwachungseinrichtung einfach zu montieren ist und fehlersicher arbeitet, gehören zu dem Drehmelder (1) mindestens ein Sendeelement (2) und eine Mehrzahl von dem Sendeelement (2) zugeordneten Empfangselementen (10̸), wobei das Sendeelement (2) um eine Achse (7) drehbar ist und in jeder Bewegungslage wenigstens einem Empfangselement (10̸) gegenüberliegt.

## Beschreibung

Die Erfindung betrifft eine Positionsüberwachungseinrichtung, insbesondere für eine Schiffsverladeeinrichtung, mit mindestens einem Drehmelder, der mit einer Auswerteeinheit verbindbar oder verbunden ist.

Positionsüberwachungseinrichtungen werden überall dort eingesetzt, wo es darum geht, Bewegungen von Bauteilen zu steuern bzw. kontinuierlich zu überwachen. So werden sie beispielsweise als Stellungsrückmelder von Ventilen oder auch zur Überwachung eines Anschlußendes einer Schiffsverladeeinrichtung verwendet. Die Probleme, die sich beim Einsatz solcher Positionsüberwachungseinrichtungen ergeben, sind vielfältig, jedoch im wesentlichen unabhängig von dem jeweiligen Einsatzgebiet. Sie sollen im folgenden am Beispiel von Positionsüberwachungseinrichtungen, wie sie zur Überwachung der Position eines Anschlußendes einer Schiffsverladeeinrichtung eingesetzt werden, erläutert werden.

Schiffsverladeeinrichtungen dienen in erster Linie dazu, Schiffe mit flüssigen Gütern wie beispielsweise öl zu beladen. Zu einer solchen Schiffsverladeeinrichtung gehört ein Ausleger, der aus mehreren gelenkig miteinander verbundenen Auslegerarmen gebildet ist und an seinem freien Ende ein Anschlußende zur Verbindung des Auslegers mit einer Anschlußstelle eines Schiffes aufweist.

Die Anschlußstelle des Schiffes ist während der Ladevorgänge nicht ortsfest, da sich das Schiff ständig bewegt. Die Bewegungen sind zwangsläufig, da sich beim Wechsel der Gezeiten der Wasserstand und während der Ladevorgänge der Tiefgang des Schiffes ständig ändern und das Schiff außerdem den Wellenbewegungen des Wassers folgt. Die bekannten Schiffsverladeeinrichtungen sind in der Lage, solche Bewegungen in gewissen Grenzen selbständig auszugleichen. Sie weisen jedoch zusätzlich Sicherheitseinrichtungen auf, die in dem Fall, daß die Bewegungen die vorgegebenen Grenzen überschreiten, die Verbindung zwischen der Schiffsverladeeinrichtung und dem Schiff lösen.

So ist beispielsweise bekannt, an dem Ausleger der Schiffsverladeeinrichtung Endschalter vorzusehen, die beispielsweise beim Überschreiten eines gewissen Winkels zwischen dem Innen- und Außenarm des Auslegers einen Kontakt schließen oder unterbrechen, so daß ein akustisches Warnsignal ertönt und/oder die Verbindung zwischen der Schiffsverladeeinrichtung und dem Schiff automatisch getrennt wird. Eine solche Sicherheitseinrichtung gibt zwar gewisse Sicherheiten, sie ermöglicht allerdings nur die Erfassung von Grenzsituationen. Auch diese erfolgt aber nur unzureichend. Denn es werden die Winkelstellungen zwischen jeweils nur zwei Bauteilen separat, d.h. ohne Berücksichtigung der Lagen der anderen Bauteile ausgewertet. Die Position des Anschlußendes der Schiffsverladeeinrichtung ergibt sich jedoch aus den Lagen aller beweglichen Bauteile zusammen. Daraus ergibt sich die Notwendigkeit, die Stellungen dieser Bauteile komplex, d.h. in Abhängigkeit voneinander, auszuwerten.

Es ist weiterhin bekannt, mit Hilfe einer Positionsüberwachungseinrichtung die Position des Anschlußendes der Schiffsverladeeinrichtung während der Ladevorgänge kontinuierlich zu überwachen (EP-A-0̸ 0̸96 187). Die bekannte Positionsüberwachungseinrichtung weist dazu mehrere Drehmelder auf, die einerseits den Winkel zwischen der Kaivorderkante und dem Ausleger in der horizontalen Ebene und andererseits die Winkelstellungen der Auslegerarme in der vertikalen Ebene ermitteln. Zur Erfassung der Winkelstellungen der Auslegerarme in der vertikalen Ebene wird einerseits der Winkel zwischen dem Innenarm und der Längsachse des Grundkörpers und andererseits der Winkel zwischen dem Innen- und dem Außenarm gemessen. Mit Hilfe der ermittelten Winkelwerte kann bei vorgegebenen Längen der Auslegerarme die Lage des Anschlußendes berechnet und beispielsweise auf einem Bildschirm optisch dargestellt werden.

Die bekannte Positionsüberwachungseinrichtung ist in verschiedener Hinsicht nicht zufriedenstellend. Zum einen ist es erforderlich, die als elektrische Widerstandsmeßgeber ausgebildeten Drehmelder exakt an den Bauteilen, zwischen denen eine Winkelstellung gemessen werden soll, anzuordnen und sie dort auch zu justieren. Dadurch gestaltet sich die Montage und die Justage der Drehmelder äußerst schwierig und aufwendig. Außerdem ist die bekannte Positionsüberwachungseinrichtung von vorneherein fehlerbehaftet. Als Maß für den jeweiligen Winkel zwischen zwei Bauteilen wird nämlich die Stromstärke gemessen. Diese ist jedoch nicht nur abhängig von dem sich je nach Winkelstellung einstellenden Widerstand, sondern auch von der anliegenden Spannung, die nicht völlig konstant gehalten werden kann. Ausfälle und Alterung können ein Fehlverhalten ebenfalls hervorrufen.

Aufgabe der vorliegenden Erfindung ist es nun, eine Positionsüberwachungseinrichtung zu schaffen, die einfach zu montieren ist. In weiterer Ausgestaltung der Erfindung soll die Positionsüberwachungseinrichtung fehlersicher ausgestaltet werden und auch Systeme von miteinander bewegbar verbundenen Bauteilen sicher überwachen können.

Die zuvor aufgezeigte Aufgabe ist bei der Positionsüberwachungseinrichtung nach dem Oberbegriff des Anspruchs 1 dadurch gelöst, daß zu dem Drehmelder mindestens ein Sendeelement und eine Mehrzahl von dem Sendeelement zugeordneten Empfangselementen gehören, daß das Sendeelement um eine Achse drehbar ist und daß das Sendeelement in jeder Bewegungslage wenigstens einem Empfangselement gegenüberliegt. Im Unterschied zu den bekannten Positionsüberwachungseinrichtungen gehören zu dem Drehmelder der erfindungsgemäßen Positionsüberwachungseinrichtung einerseits ein Sendeelement und andererseits eine Mehrzahl von Empfangselementen. Das Sendeelement ist um eine Achse drehbar angeordnet und kann somit entlang einer Kreisbahn um diese Achse oder durch eine geeignete Übersetzung auch beispielsweise geradlinig bewegt werden. Die Empfangselemente sind entlang der Bewegungsbahn des Sendeelements angeordnet, so daß das Sendeelement in jeder Bewegungslage wenigstens einem der Empfangselemente gegenüberliegt.

In Ausbildung der Positionsüberwachungseinrichtung ist vorgesehen, daß das Sendeelement mit einem Pendel drehverbunden ist. Hierzu kann das Sendeelement direkt an dem Pendel drehfest angeordnet sein. Es ist jedoch ebenso möglich, ein Getriebe zwischenzuschalten. Das Pendel dient zur Übersetzung von Drehbewegungen, die ein zu überwachendes Bauteil in einer vertikalen Ebene ausführt und ist an diesem auch angeordnet. Das Pendel ist unabhängig von der Lage des zu überwachenden Bauteils stets gleich ausgerichtet und führt entsprechend dann, wenn sich das Bauteil in der vertikalen Ebene bewegt, Drehbewegungen relativ zu diesem aus. Diese werden an das mit dem Pendel drehverbundene Sendeelement übertragen, das dann in jeder Schwenklage des Bauteils einem dieser Schwenklage entsprechenden Empfangselement gegenüberliegt.

Die Übersetzung einer Drehbewegung eines zu überwachenden Bauteils mit Hilfe eines Pendels ist auch insofern vorteilhaft, als im Gegensatz zu den bekannten Drehmeldern nicht die Relativlage zu einem anderen Bauteil, sondern die reale Lage in der zu überwachenden vertikalen Ebene beispielsweise zur Vertikalen oder Horizontalen direkt bestimmt wird, so daß die bei den bekannten Positionsüberwachungseinrichtungen notwendigen Umrechnungsoperationen entfallen.

Die Montage dieser Positionsüberwachungseinrichtung ist besonders einfach, da der Drehmelder komplett vormontiert und dann als Einheit an dem zu überwachenden Bauteil befestigt werden kann. Bei der Montage ist lediglich darauf zu achten, daß die Achse des Pendels senkrecht zu der zu überwachenden vertikalen Ebene ausgerichtet ist. Dies ist jedoch mit Hilfe einer Wasserwaage einfach realisierbar. Die weitere Justage erfolgt erst später durch eine entsprechende Verkabelung der Empfangselemente.

Bei einer weiteren Ausführungsform ist vorgesehen, daß das Sendeelement mit einem Getriebe (3) verbunden ist. Das Getriebe ist hier anstatt eines Pendels vorgesehen und verbindet das Sendeelement des ortsfest angeordneten Drehmelders mit dem zu überwachenden Bauteil, um Bewegungen, die dieses in einer beliebigen vorgegebenen Ebene ausführt, in eine Drehbewegung des Sendeelements zu übersetzen.

In Ausbildung der Positionsüberwachungseinrichtung ist weiterhin vorgesehen, daß das Sendeelement entlang einer zu ihrer Achse konzentrischen Kreisbahn bewegbar ist und die Empfangselemente entlang eines zu der Achse konzentrischen Kreisbogens in gleichmäßigen Abständen angeordnet sind. Dabei hängt es von der Ausbildung der Sendeelemente und der Empfangselemente ab, ob das Sendeelement und die Empfangselemente in radialer Richtung oder in Längsrichtung der Achse beabstandet voneinander vorgesehen sind. Es ist auch nicht notwendig, die Kreisbahn exakt einzuhalten oder die Empfangselemente in einer gemeinsamen Ebene vorzusehen, die zulässigen Abweichungen hängen von der Streuung des Sendeelements und der Größe der Empfänger der Empfangselemente ab. Wesentlich ist, daß das Sendeelement in jeder seiner Schwenklage mindestens einem Empfangselement so gegenüberliegt, daß es ein von dem Sendeelement abgegebenes Sendesignal empfängt und somit für die Schwenklage präsentativ ist. Die Sende- und Empfangselemente müssen so ausgelegt und angeordnet sein, daß ausgeschlossen ist, daß in irgendeiner Schwenklage des Sendeelements keines der Empfangselemente ein Sendesignal empfängt.

Selbstverständlich ist es auch möglich, in kinematischer Umkehr das Sendeelement drehfest und die Empfangselemente drehbar anzuordnen.

In Ausbildung der Erfindung ist vorgesehen, daß zu dem Getriebe ein Hebelmechanismus gehört, der insbesondere als Gelenkparallelogramm ausgebildet sein kann. Mit einem solchen Hebelmechanismus können auch über größere Entfernungen Dreh- und Schwenkbewegungen eines Bauteils in einer vorgegebenen Ebene an den Drehmelder übertragen und in eine Drehbewegung des Sendeelements um seine Achse umgesetzt werden.

Nach einer weiteren Ausführungsform ist vorgesehen, das Getriebe als Zahnradgetriebe mit einer Mehrzahl von miteinander in Eingriff stehenden Zahnrädern auszubilden. Diese Ausbildung hat den Vorteil, daß die Achse des Sendeelementes und die Achse, um die das Bauteil dreht bzw. schwenkt, nicht parallel zueinander ausgerichtet zu sein brauchen. Denn durch eine geeignete Anordnung und Auswahl von Zahnrädern können Winkelversätze zwischen den Achsen einfach ausgeglichen werden. Außerdem kann durch eine geeignete Auswahl von Zahnrädern auch auf einfache Weise eine Übersetzung realisiert werden, so daß die Auflösung des Drehmelders geändert werden kann.

Da es mit einem relativ hohen Aufwand verbunden ist, mit einem Zahnradgetriebe auch größere Distanzen zu überbrücken, kann das Zahnradgetriebe gegebenenfalls auch mit einem Hebelmechanismus kombiniert werden, so daß die Vorteile beider Systeme erreicht werden.

In weiterer Ausbildung der Positionsüberwachungseinrichtung ist vorgesehen, daß das Getriebe einen Kurbeltrieb aufweist, um eine geradlinige Bewegung in eine Drehbewegung umzusetzen. Dann können mit der erfindungsgemäßen Positionsüberwachungseinrichtung auch geradlinige Bewegungen, die ein zu überwachendes Bauteil in einer vorgegebenen Ebene ausführt, überwacht werden. Der Kurbeltrieb kann direkt mit den Sendeelementen drehfest verbunden sein. Es ist jedoch auch möglich, ein Getriebe zwischenzuschalten, um beispielsweise einen Winkelversatz zwischen der Bewegungsebene des Bauteils und der Ebene, in der das Sendeelement drehbar ist, auszugleichen oder eine Übersetzung zu realisieren.

Desweiteren ist in Ausbildung der Erfindung vorgesehen, daß der Drehmelder ein Gehäuse aufweist, in dem das Sendeelement um die Achse drehbar und die Empfangselemente drehfest angeordnet sind. Damit bildet der Drehmelder eine geschlossene Einheit, die als ganzes vormontiert werden kann und gegen äußere Einflüsse wie beispielsweise Regen geschützt ist. Bei der Ausbildung des Drehmelders mit einem Pendel ist dies vollständig möglich. Ist jedoch ein zusätzliches Getriebe vorhanden, so kann es vorteilhaft sein, das Sendeelement drehfest mit einer Welle, die in dem Gehäuse um die Achse drehbar gelagert ist, zu verbinden und ein Ende aus dem Gehäuse zur Verbindung mit dem Getriebe herauszuführen.

In der weiteren Ausbildung der Positionsüberwachungseinrichtung ist vorgesehen, daß zu dem Drehmelder weitere Sendeelemente gehören, die mit dem vorhandenen Sendeelement drehfest verbunden und zu diesem winkelversetzt angeordnet sind. Bei einer gleichmäßigen Anordnung der Empfangselemente betragen dann der Winkelversatz zwischen zwei Sendeelementen ein nicht ganzzahliges Vielfaches des Winkelversatzes zwischen zwei nebeneinander liegenden Empfangselementen. Durch diese Anordnung kann die Auflösung der Positionsüberwachungseinrichtung erheblich verbessert werden. Von den vorhandenen Sendeelementen liegt dann jeweils nur eines einem der Empfangselemente genau gegenüber, während die anderen Sendeelemente auf Lücke zwischen jeweils zwei anderen Empfangselementen angeordnet sind. Dann reicht bereits eine geringe Drehung der Sendeelemente um die Achse aus, damit eines der weiteren Sendeelemente einem Empfangselement direkt gegenüberliegt, so daß dieses von dem Sendeelement abgestrahlte Signale empfängt.

In Ausbildung der Erfindung ist weiter vorgesehen, daß sich der Winkelversatz zwischen den Sendeelementen als Differenz des zu überwachenden Winkels und dem Quotienten aus einerseits dem Maß des zu überwachenden Winkels und andererseits dem Produkt aus der Anzahl der im Bereich des zu überwachenden Winkels vorhandenen Empfangselemente und der Anzahl der vorhandenen Sendeelemente berechnet. Auf diese Weise ist gewährleistet, daß sich die Auflösung umgekehrt proportional zu der Anzahl der Sendeelemente verhält.

Als konkrete Ausführungsform ist vorgesehen, daß insgesamt 72 Empfangselemente entlang eines Kreisbogens von 360̸° angeordnet und insgesamt zwei Sendeelemente vorgesehen sind und daß der Winkel zwischen den beiden Sendeelementen 177,5° beträgt. Durch diese Anordnung ist eine Winkelüberwachung von 180̸° bei einer Auflösung von 2,5° möglich.

Nach einer weiteren Ausführungsform ist vorgesehen, daß 72 Empfangselemente entlang eines Kreisbogens von 360̸° angeordnet und insgesamt vier Sendeelemente vorgesehen sind und daß der Innenwinkel zwischen zwei benachbarten Sendeelementen jeweils 88,75° beträgt. Dadurch ist eine Winkelüberwachung von 90̸° bei einer Auflösung von 1,25° möglich. Hierbei ist es selbstverständlich, daß in einem Fall der Winkel zwischen zwei nebeneinander liegenden Sendeelementen nicht dem vorgegebenen Wert von 88,75° ergeben kann, sondern 93,75° beträgt, um einen Gesamtwinkel von 360̸° zu erreichen.

Nach einer weiteren Ausführungsform ist jedes Sendeelement einzeln zuschaltbar, so daß der Überwachungsbereich und die Auflösung variabel sind.

In der weiteren Ausbildung der Erfindung ist vorgesehen, das Sendeelement bzw. die Sendeelemente und die Empfangselemente als optische Sende- und Empfangselemente, insbesondere als Infrarotsensoren auszubilden. Dadurch ist gewährleistet, daß die Anordnung unabhängig von äußeren Einflüssen arbeiten kann.

In vorteilhafter Weise ist die Positionsüberwachungseinrichtung dadurch gekennzeichnet, daß die Sendeelemente Sendeimpulse abgeben, wobei die Frequenz vorzugsweise zwischen 10̸0̸ Hz und 1 kHz liegt. Dadurch entstehen im Unterschied zu den bekannten Drehmeldern dynamisch, vorzugsweise digitale Meßsignale, die für eine fehlersichere Auswertung von Vorteil sind.

Das jeweils Sendeimpulse empfangende Empfangselement übermittelt Signale mit der Frequenz der Sendeimpulse an die Auswerteeinheit. Auf diese Weise werden dynamische Signale in der Auswerteeinheit ausgewertet.

In Ausbildung der Erfindung ist vorgesehen, daß zu der Auswerteeinheit eine Überwachungseinheit mit einer Vergleichseinrichtung gehört und die Vergleichseinrichtung nur dann Ausgangssignale erzeugt, wenn die Frequenz der von den Empfangselementen übermittelten Signale mit der Funktionsfrequenz synchron ist. Dazu ist die Vergleichseinrichtung als UND-Gatter ausgebildet, das eingangsseitig einerseits mit der Ausgangsseite der Empfangselemente und andererseits mit dem Funktionsfrequenzgenerator verbunden ist. Zwischen den Funktionsfrequenzgenerator und das UND-Gatter ist zusätzlich ein dynamischer Filter geschaltet. Diese Ausbildung der Überwachungseinheit dient einer fehlersicheren Auswertung der von dem Drehmelder übermittelten Signale. Fällt nämlich eines der Sende- oder Empfangselemente aus irgendeinem Grund aus, so werden an das UND-Gatter von dieser Seite her keine Signale mehr übertragen, so daß keine Ausgangssignale mehr abgegeben werden. Gleiches gilt für den Fall, daß der Funktionsfrequenzgenerator gestört ist, d. h. wenn er entweder überhaupt keine Signale oder ein konstantes Signal abgibt. Im letzteren Fall wird dies durch den dynamischen Filter bewirkt, der konstante Signale ausfiltert.

Zur Einstellung eines Überwachungsbereichs ist vorgesehen, daß die Empfangselemente einzeln zuschaltbar sind bzw. daß die Verbindung jedes einzelnen Empfangselementes mit der Vergleichseinrichtung durch einen Codierschalter unterbrochen werden kann. Die Einstellung eines Überwachungsbereiches ist auf diese Weise einfach und braucht nicht direkt an den Drehmelder, sondern kann an einer extern vorgesehenen Auswerteeinheit vorgenommen werden. Es werden dabei jeweils nur die Codierschalter für diejenigen Empfangselemente, die innerhalb des zu überwachenden Bereiches liegen, geschlossen, so daß an dem Ausgang des UND-Gatters nur dann Ausgangssignale erzeugt werden, wenn eines dieser Empfangselemente Signale von einem Sendeelement empfängt.

In weiterer Ausgestaltung ist vorgesehen, daß die Vergleichseinrichtung ausgangsseitig mit einem Ausgangsverstärker der Auswerteeinheit verbunden ist und der Ausgangsverstärker eine Ausgangsspannung erzeugt, solange er von dem Vergleichselement Signale erhält. Die Ausgangsspannung dient zur Betätigung eines Schaltelements, beispielsweise eines Schützes, zur Betätigung einer Warnvorrichtung. In dem Augenblick, wo der Ausgangsverstärker von dem Vergleichselement keine Signale mehr erhält, erzeugt dieser ausgangsseitig keine Ausgangsspannung mehr, so daß das Schütz stromlos und damit die Warnvorrichtung betätigt wird.

In Ausbildung dieser Ausführungsform ist vorgesehen, daß zu dem Ausgangsverstärker ein Schaltelement, beispielsweise ein Schalttransistor gehört, das eingangsseitig mit der Ausgangsseite der Vergleichseinrichtung verbunden ist und einen Stromkreis für die Primärseite einer induktiven Kopplung steuert, deren Sekundärseite die Ausgangsspannung des Ausgangsverstärkers erzeugt.

Um gleichzeitig mehrere Überwachungsbereiche zu überwachen, sind weitere Auswerteeinheiten vorgesehen, die parallel zu der vorhandenen Auswerteeinheit mit den Empfangselementen verbunden sind. Von den Empfangselementen abgegebene Signale werden dann gleichzeitig in mehreren Auswerteeinheiten ausgewertet, in denen unterschiedliche Überwachungsbereiche eingestellt sind. Auf diese Weise kann einfach ein Vorwarnsystem realisiert werden.

In weiterer Ausbildung der Erfindung ist vorgesehen, neben dem vorhandenen Drehmelder einen zweiten Drehmelder vorzusehen, jeden Signalausgang des ersten Drehmelders mit einem Signaleingang einer ihm zugeordneten ersten Überwachungseinheit zu verbinden, die Signalausgänge des zweiten Drehmelders mit jeder ersten Überwachungseinheit in Parallelschaltung zu verbinden und die von dem zweiten Drehmelder abgegebenen Signale jeweils nur in derjenigen ersten Überwachungseinheit auszuwerten, die auch durch den ersten Drehmelder angesteuert ist.

In vorteilhafter Ausgestaltung der Erfindung ist weiterhin vorgesehen, daß ein dritter Drehmelder vorgesehen ist, daß jede erste Überwachungseinheit für jede mögliche Winkelstellung einen eigenen Signalausgang zur Verbindung mit einer diesem zugeordneten zweiten Überwachungseinheit aufweist, daß die Signalausgänge des dritten Drehmelders mit jeder zweiten Überwachungseinheit in Parallelschaltung verbunden ist und daß die von dem dritten Drehmelder abgegebenen Signale jeweils nur in der jetzigen zweiten Überwachungseinheit ausgewertet werden, die auch durch die ersten Überwachungseinheiten (31) angesteuert sind. Auf die gleiche Weise können auch noch beliebig viele weitere Drehmelder mit angeschlossen werden. Eine solche Ausbildung ist beispielsweise notwendig, um eine Schiffsverladeeinrichtung bestehend aus einer Säule, einem Innenarm und einem Außenarm komplex auszuwerten. Die Überwachungsbereiche der ersten Überwachungseinheiten können nämlich hier in Abhängigkeit von der jeweiligen Winkelstellung des von dem ersten Drehmelder überwachten Bauteils unterschiedlich eingestellt werden. Gleiches gilt für die zweiten Überwachungseinheiten, deren Überwachungsbereiche in Abhängigkeit der jeweiligen Stellungen der durch den ersten und zweiten Drehmelder überwachten Bauteile unterschiedlich eingestellt werden. Im Ergebnis ist für jede mögliche Stellungskombination der vorhandenen zu überwachenden Bauteile eine eigene Überwachungseinheit vorgesehen, so daß für jede dieser Stellungen separat bestimmbar ist, ob ein Alarm ausgelöst werden soll oder nicht.

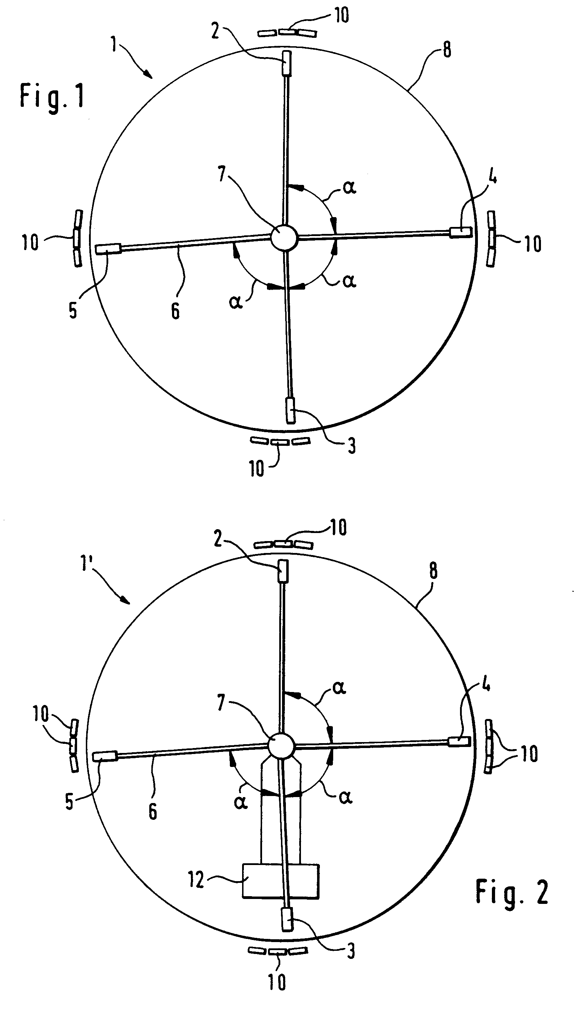

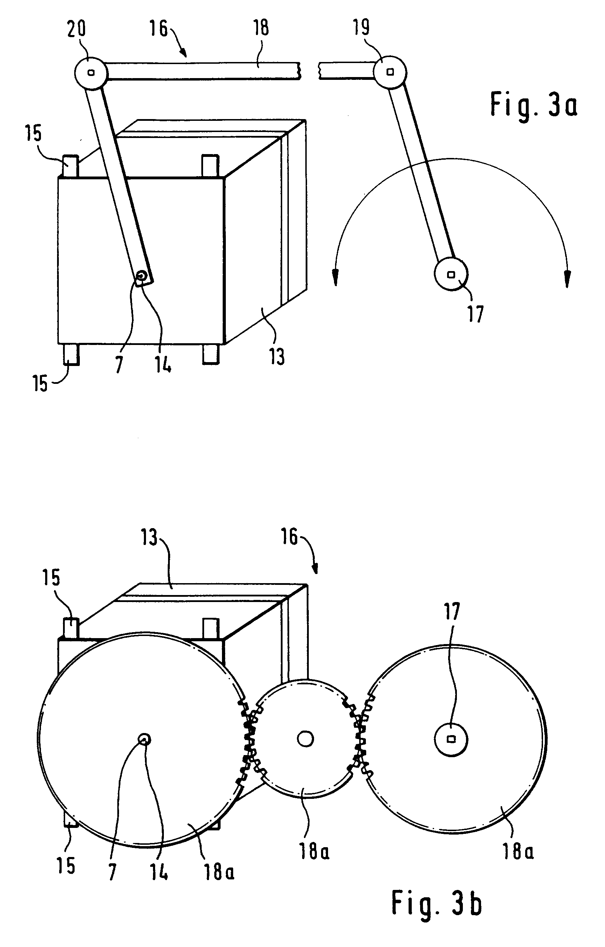

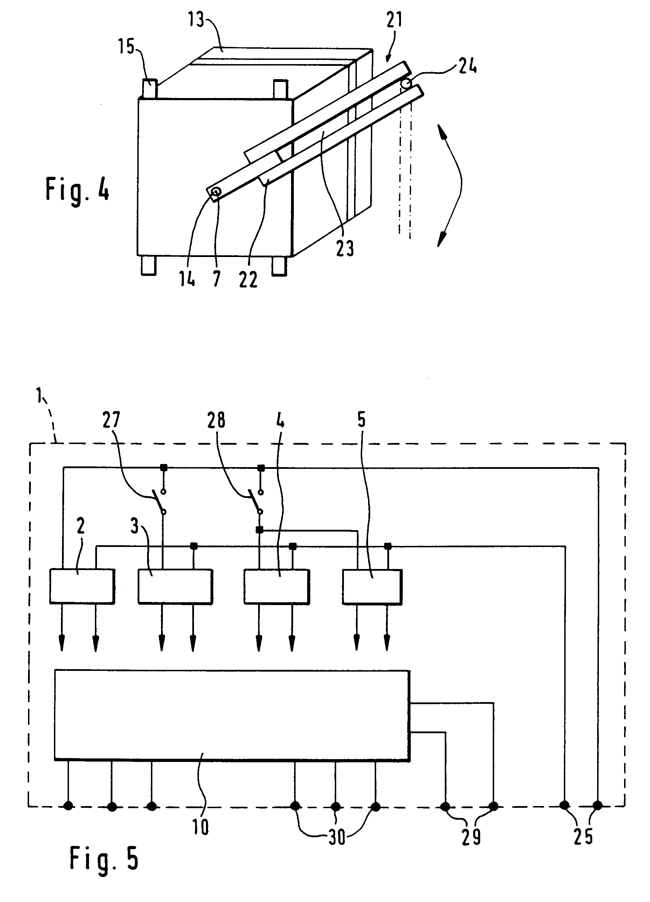

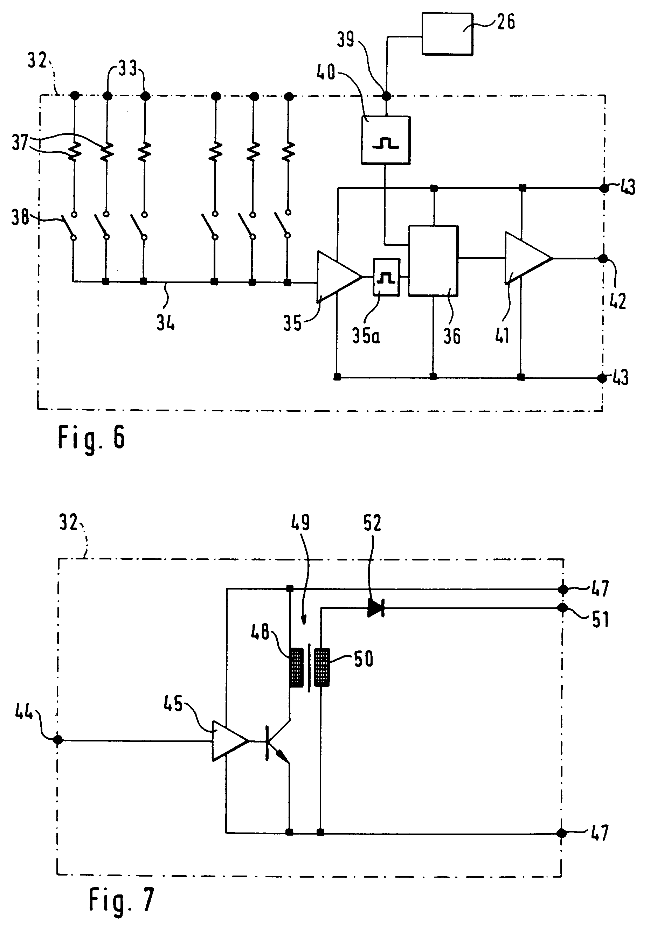

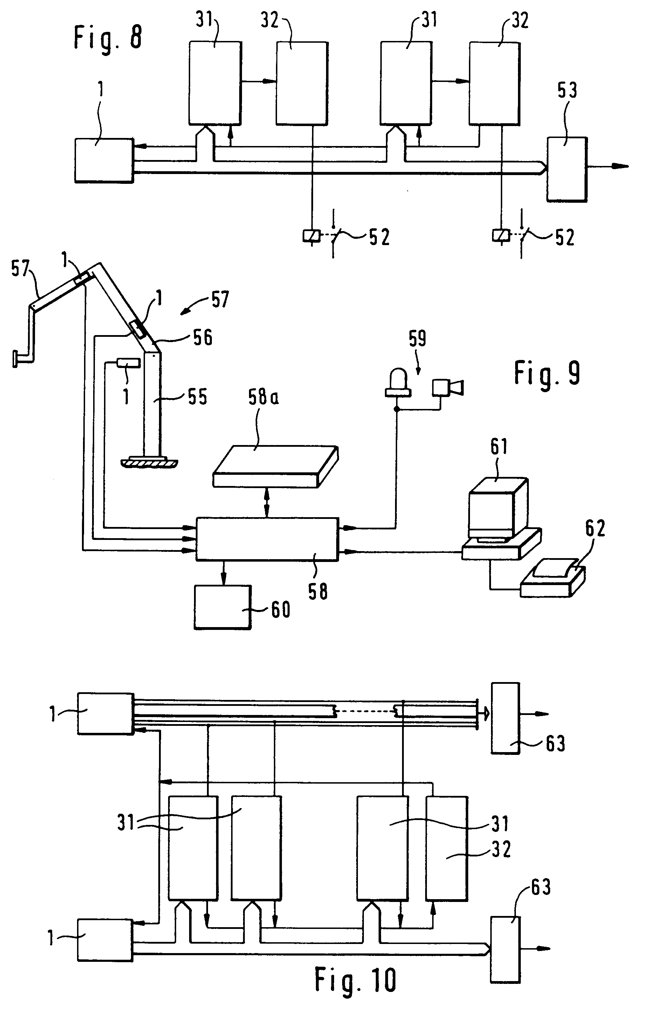

In der Zeichnung ist die Erfindung an Hand von Ausführungsbeispielen näher veranschaulicht. Es zeigt:
- Figur (1): einen Drehmelder einer Positionsüberwachungseinrichtung;
- Figur (2): einen Drehmelder zur Überwachung von Dreh- und Schwenkbewegungen, die in einer vertikalen Ebene stattfinden;
- Figur (3a): eine Positionsüberwachungseinrichtung zur Überwachung von Dreh- und Schwenkbewegungen, die in einer beliebigen Ebene stattfinden;
- Figur (3b): eine weitere Positionsüberwachungseinrichtung zur Überwachung von Dreh- und Schwenkbewegungen, die in einer beliebigen Ebene stattfinden;
- Figur (4): eine Positionsüberwachungseinrichtung zur Überwachung von geradlinigen Bewegungen, die in einer beliebigen Ebene stattfinden;
- Figur (5): ein Schaltbild des Drehmelders der Positionsüberwachungseinrichtung;
- Figur (6): ein Schaltbild der Überwachungseinheit einer Auswerteeinheit der Positionsüberwachungseinrichtung;
- Figur (7): ein Schaltbild des Ausgangsverstärkers der Auswerteeinheit der Positionsüberwachungseinrichtung;
- Figur (8): die Positionsüberwachungseinrichtung in schematischer Darstellung;
- Figur (9): in schematischer Darstellung eine Positionsüberwachungseinrichtung zur Überwachung einer Schiffsverladeeinrichtung und
- Figur (10̸): ein Funktionsschema einer Positionsüberwachungseinrichtung zur Überwachung von sich überlagernden Bewegungen;
Figur (1) zeigt einen Drehmelder (1) einer Positionsüberwachungseinrichtung. Zu dem Drehmelder (1) gehören vier Sendeelemente (2, 3, 4, 5), die jeweils an den äußeren Enden eines Achskreuzes (6) befestigt und auf diese Weise drehfest miteinander verbunden sind. Das Achskreuz (6) ist um eine senkrecht zu der Bildebene von Figur (1) verlaufende Achse (7) drehbar gelagert. Dabei weisen die Sendeelemente (2, 3, 4, 5) von der Achse (7) alle den gleichen radialen Abstand auf, so daß sie entlang einer in der Bildebene von Figur (1) verlaufenden Kreisbahn (8) bewegbar sind. Um die Sendeelemente (2, 3, 4, 5) herum sind entlang eines zur Achse (7) konzentrischen Kreisbogens (9) eine Mehrzahl von den Sendeelementen (2, 3, 4, 5) zugeordneten Empfangselementen (10̸) ortsfest vorgesehen. Die Anordnung ist so getroffen, daß die Sender der Sendeelemente (2, 3, 4, 5) jeweils auf die Empfänger der Empfangselemente (10̸) ausgerichtet sind und bei einer Drehung des Achskreuzes (6) stets gewährleistet ist, daß eines der Sendelemente (2, 3, 4, 5) einem der Empfangselemente (10̸) genau gegenüberliegt, so daß dieses von dem ihm gegenüberliegenden Sendelement (2, 3, 4, 5) abgestrahlte Signale empfangen kann.

Entlang des Kreisbogens (9) sind insgesamt 72 Empfangselemente (10̸) vorgesehen, die jedoch in den Figuren (1) und (2) nur andeutungsweise dargestellt sind. Die insgesamt vier hier vorgesehenen Sendeelemente (2, 3, 4, 5) sind entlang des Umfanges der Kreisbahn (8) versetzt angeordnet, wobei jeweils zwei nebeneinanderliegende Elemente (2, 3, 4, 5) einen Winkel α einschließen, der 88,75° beträgt. Um insgesamt auf einen Winkel von 360̸° zu kommen, beträgt der Winkel zwischen dem in Figur (1) nach oben zeigenden Sendeelement (2) und dem nach links zeigenden Sendeelement (5) 93,75°.

Ist nur eines der Sendeelemente (2, 3, 4, 5) im Betrieb, so beträgt der maximal mögliche Überwachungswinkel 360̸° bei einer Auflösung von 5°. Sind zwei einander gegenüberliegende Sendeelemente (2, 3) zusammen im Betrieb, so kann ein Winkel von 180̸° bei einer Auflösung von 2,5° überwacht werden; sind alle vier Sendeelemente (2, 3, 4, 5) im Betrieb, so kann ein Winkel von 90̸° bei einer Auflösung von 1,25° überwacht werden. Die genaue Funktionsweise des Drehmelders (1) wird noch erläutert werden.

Der zuvor erläuterte prinzipielle Aufbau ist allen nachfolgend beschriebenen Ausführungsformen von Drehmeldern (1) gemein. Diese unterscheiden sich nur durch die Art und Weise, wie Bewegungen des zu überwachenden Bauteils in eine Drehbewegung des Achskreuzes (6) und damit auch der Sendeelemente (2, 3, 4, 5) übersetzt werden.

Figur (2) zeigt einen Drehmelder (1'), der direkt an einem sich bewegenden Bauteil angeordnet werden kann und Bewegungen, die dieses Bauteil in einer vertikalen Ebene ausführt, überwacht. Dieser Drehmelder (1') ist im wesentlichen wie der zuvor erläuterte Drehmelder (1) ausgebildet. Er weist zur Übersetzung einer Drehbewegung des zu überwachenden Bauteils zusätzlich ein Pendel (12) auf, das drehfest mit dem Achskreuz (6) verbunden ist. Der Drehmelder (1') wird so an dem zu überwachenden Bauteil angeordnet, daß die Achse (7) senkrecht zu der vertikalen Ebene, in der das Bauteil Bewegungen ausführt, ausgerichtet ist, die Bildebene von Figur (2) also parallel zu dieser vertikalen Ebene liegt. Dabei sind die Empfangselemente (10̸) gegenüber dem Bauteil drehfest, während die Sendeelemente (2, 3, 4, 5) gegenüber dem Bauteil um die Achse (7) drehbar sind, so daß das mit dem Achskreuz (6) verbundene Pendel (12) durch die Schwerkraft stets die gleiche definierte Lage einnimmt.

Bei einer Dreh- oder Schwenkbewegung des Bauteils in der vertikalen Ebene werden die mit dem Bauteil drehfest verbundenen Empfangselemente (10̸) mit dem Bauteil geschwenkt, während das relativ zu dem Bauteil drehbare Pendel (12) und die Sendeelemente (2, 3, 4, 5) in der vertikalen Ebene stets gleich ausgerichtet bleiben. Dadurch führen die Sendeelemente (2, 3, 4, 5) und die Empfangselemente (10̸) eine relative Drehbewegung um die Achse (7) gegeneinander aus, so daß die Sendeelemente (2, 3, 4, 5) in jeder Lage des Bauteils einem anderen Empfangselement (10̸) gegenüberliegen.

Die Figuren (3a) und (3b) zeigen weitere Positionsüberwachungseinrichtungen, mit denen nicht nur Schwenkbewegungen in einer vertikalen Ebene, sondern auch in jeder anderen Ebene überwacht werden können. Die Drehmelder (1'') sind im wesentlichen wie der in Figur (1) dargestellte ausgebildet. Jeder Drehmelder (1) weist ein zweiteiliges Gehäuse (13) auf, in dem die Empfangselemente (10̸) drehfest angeordnet sind. Die Sendeelemente (2, 3, 4, 5) sind drehfest mit einer Welle (14), die in dem Gehäuse (13) um ihre Achse (7) drehbar gelagert ist, verbunden. An dem Gehäuse (13) sind mehrere Befestigungslaschen (15) vorgesehen, mit deren Hilfe das Gehäuse (13) ortsfest festgelegt werden kann.

Zur Übersetzung einer Drehbewegung eines zu überwachenden Bauteils an den Drehmelder (1'') ragt ein Ende der Welle (14) aus dem Gehäuse (13) heraus und ist über ein Getriebe (16) mit einem zu überwachenden Bauteil so verbunden, daß eine Drehbewegung des Bauteils um eine Achse (17) zu einer Drehbewegung der Welle (14) und somit der Sendeelemente (2, 3, 4, 5) relativ zu den Empfangselementen (10̸) führt. Bei dem in Figur (3a) dargestellten Getriebe (16) handelt es sich um einen als Gelenkparalellogramm (18) ausgebildeten Hebelmechanismus, dessen Zwischengelenkachsen (19, 20̸) parallel zu der Achse (7) der Welle (14) und der Achse (17), um die das Bauteil dreht bzw. schwenkt, ausgerichtet sind.

Bei der in Figur (3b) gezeigten Positionsüberwachungseinrichtung ist das Getriebe (16) als Zahnradgetriebe mit einer Mehrzahl von miteinander kämmenden Zahnrädern (18a) ausgebildet. Diese Anordnung hat den Vorteil, daß bei geeigneter Auswahl der Zahnräder (18a) auf einfache Weise auch unterschiedliche Übersetzungen realisiert werden können, wodurch beispielsweise die Auflösung des Drehmelders (1) verbessert werden kann.

Figur (4) zeigt schließlich eine Positionsüberwachungseinrichtung, mit der auch geradlinige Bewegungen, die ein Bauteil in einer vorgegebenen Ebene ausführt, überwacht werden können. Eine solche geradlinige Bewegungsbahn ist in Figur (4) gestrichelt angedeutet. Das Getriebe (16) weist einen Kurbeltrieb (21) auf. Zu diesem gehört eine Kurbel (22), die in einfacher Weise direkt mit der Welle (14) drehfest verbunden ist und eine Kulisse (23) aufweist, in der ein Zapfen (24) eines nicht weiter dargestellten zu überwachenden Bauteils geradlinig bewegbar geführt ist. Mit einem solchen Kurbeltrieb (21) ist es möglich, geradlinige Bewegungen des zu überwachenden Bauteil in eine Drehbewegung der Welle (14) und somit der Sendeelemente (2, 3, 4, 5) umzusetzen.

Figur (5) zeigt nun ein Schaltbild eines Drehmelders (1) der Positionsüberwachungseinrichtung. Zu der Schaltung gehören die vier Sendeelemente (2, 3, 4, 5), denen gegenüberliegend die 72 Empfangselemente (10̸) angeordnet sind. Diese sind zur Vereinfachung in Figur (5) als Block dargestellt. Die Sendeelemente (2, 3, 4, 5) sind über einen Eingang (25) mit einem hier nicht näher dargestellten Funktionsfrequenzgenerator (26) verbunden. Die Anordnung ist dabei so getroffen, daß ein Sendeelement (2) ständig mit dem dem Eingang (25) verbunden ist, während die Verbindung zu dem dem Sendeelement (2) gegenüberliegenden Sendeelement (3) einerseits und die gemeinsame Verbindung für die beiden weiteren Sendeelemente (4, 5) andererseits durch Schalter (27, 28) unterbrochen werden können, so daß das Sendeelement (2) wahlweise entweder allein oder zusammen mit dem ihm gegenüberliegenden Sendeelement (3) oder zusammen mit allen anderen Sendeelementen (3, 4, 5) in Betrieb genommen werden kann, jenachdem, welcher Überwachungsbereich und welche Auflösung realisiert werden sollen.

Die Empfangselemente (10̸) sind zur Spannungsversorgung an eine gemeinsame Energiequelle (29) angeschlossen. Jedes der Empfangselemente (10̸) ist weiterhin ausgangsseitig mit einem ihm zugeordneten Signalausgang (30̸) verbunden, um von dem Empfangselement (10̸) abgegebene Signale an eine Auswerteeinheit zu übermitteln. Von den insgesamt 72 vorhandenen Signalausgängen (30̸) sind in Figur (5) lediglich sechs dargestellt.

Im Betrieb strahlen die Sendeelemente (2, 3, 4, 5) angeregt durch die am Eingang (25) anliegende Funktionsfrequenz des Funktionsfrequenzgenerators (26) Lichtimpulse mit Funktionsfrequenz von 10̸0̸Hz bis 1kH ab. Wie bereits erläutert worden ist, liegt in jeder Drehlage des Drehmelders (1) eines der Sendeelemente (2) einem der Empfangselemente (10̸) gegenüber, so daß dieses allein die abgestrahlten Lichtimpulse empfängt. Das Empfangselement (10̸) wiederum gibt dann entsprechende Signale mit Funktionsfrequenz ab, die über den dem Empfangselement (10̸) zugeordneten Signalausgang (30̸) an die Auswerteeinheit übermittelt werden.

Zu der Auswerteeinheit gehören im wesentlichen eine Überwachungseinheit (31) und ein Ausgangsverstärker (32). Ein prinzipielles Schaltbild der Überwachungseinheit (31) ist in Figur (6) dargestellt. Die Überwachungseinheit (31) weist zur Verbindung mit dem Drehmelder (1) eine der Anzahl der Signalausgänge (30̸) der Sendeelemente (10̸) entsprechende Anzahl von Signaleingängen (33) auf. Diese werden zu einer gemeinsamen Leitung (34) zusammengeführt, die die Signaleingänge (33) über einen Signalverstärker (35) und einen dynamischen Filter (35a), der lediglich Impulssignale durchläßt, mit der Eingangsseite eines UND-Gatters (36) verbindet. Zwischen der Leitung (34) und den Signaleingängen (33) sind jeweils ein Widerstand (37) und ein Codierschalter (38) vorgesehen. Mit den Codierschaltern (38) kann die Verbindung zu den einzelnen Signaleingängen (33) zum Einstellen des Überwachungsbereichs des Drehmelders (1) unterbrochen werden.

Die Überwachungseinheit (31) weist weiterhin einen Eingang (39) zur Verbindung mit dem Funktionsfrequenzgenerator (26) auf. Der Eingang (39) ist mit dem zweiten Eingang des UND-Gatters (36) verbunden, und zwar unter Zwischenschaltung eines dynamischen Filters (40̸), der lediglich Impulssignale durchläßt, konstante Signale hingegen ausfiltert. Ausgangsseitig ist das UND-Gatter (36) über einen Signalverstärker (41) mit einem Ausgang (42) verbunden. Ferner ist eine Energiequelle (43) zur Stromversorgung der Signalverstärker (35, 41) und des UND-Gatters (36) vorgesehen.

Im Betrieb wird zunächst mit Hilfe der Codierschalter (38) der Überwachungsbereich eingestellt, und zwar indem die Verbindung zu den Signaleingängen (33) derjenigen Empfangselememte (10̸), die nicht im Bereich des Überwachungsbereiches liegen, unterbrochen werden. Soll beispielsweise mit nur einem Sendeelement (2), also bei einer Auflösung von 5°, ein Bereich von 60̸° überwacht werden, so sind hierfür zwölf Empfangselemente (10̸) notwendig. Die Auswahl der Empfangselemente (10̸) bestimmt sich nach der jeweiliegen Stellung des zu überwachenden Bauteils relativ zu dem Überwachungsbereich. Befindet sich das zu überwachende Bauteil beispielsweise mittig in seinem Überwachungsbereich, so werden die Empfangselemente (10̸) beidseitig von dem Sendeelement (2) ausgewählt, befindet sich hingegen das zu überwachende Bauteil in einer seiner Extremlagen, so werden Empfangselemente (10̸) ausgewählt, die entweder nur im Uhrzeigersinn oder nur entgegen des Uhrzeigersinns von dem Sendeelement (2) liegen. Soll die Auflösung unter Zuschaltung eines weiteren Sendeelements (3) auf 2,5° erhöht werden, so müssen entsprechend zwölf weitere Empfangselemente (10̸) zugeschaltet werden. Für eine Auflösung von 1,25° sind dann insgesamt achtundvierzig Empfangselemente (10̸) nötig.

Befindet sich das zu überwachende Bauteil nun innerhalb seines Überwachungsbereichs, so werden die von dem Sendeelement (2) abgestrahlten Signale von einem der zugeschalteten Empfangselemente (10̸) empfangen und die von dem Empfangselement (10̸) abgegebenen Signale über die Verbindungsleitung (34) und den Signalverstärker (35) dem UND-Gatter (36) zugeführt. An dem anderen Eingang des UND-Gatters (36) kommen von dem Funktionsfrequenzgenerator (26) abgegebene Signale an, die wie die von dem Empfangselement (10̸) kommenden Signale Funktionsfrequenz aufweisen. Die ankommenden Signale sind somit synchron, so daß das UND-Gatter (36) für jedes Paar ankommender Signale ein Signal an den Ausgang (42) leitet.

Liegt indes das zu überwachende Bauteil nicht in seinem Überwachungsbereich, so können die von dem dann angestrahlten Empfangselement (10̸) abgegebenen Signale nicht an das UND-Gatter (36) übermittelt werden, da die Verbindung durch den entsprechenden Codierschalter (38) unterbrochen ist. Dann kommen an dem Ausgang (42) keine Signale an.

Gleiches gilt, wenn der Funktionsfrequenzgenerator (26) gestört ist, d. h., wenn er beispielsweise überhaupt keine Signale abgibt. Denn dann sperrt das UND-Gatter (36), da die von den Empfangselementen (10̸) und dem Funktionsfrequenzgenerator (26) kommenden Signale in ihrer Frequenz nicht übereinstimmen.

Wird hingegen von dem Funktionsfrequenzgenerator (26) ein konstantes Signal abgegeben, so wird dieses durch den dynamischen Filter (40̸) herausgefiltert, so daß auch dann das UND-Gatter (36) sperrt.

Auch wenn aufgrund eines Fehlers, z.B. eines Empfangselements (10̸) oder eines Widerstandes (37) von Seiten der Signaleingänge (33) ein konstantes Signal abgegeben wird, wird dieses durch den dynamischen Filter (35a) herausgefiltert, so daß das UND-Gatter (36) sperrt.

In Figur (7) ist ein Schaltbild des Ausgangsverstärkers (32) der Auswerteeinheit der Positionsüberwachungseinheit dargestellt. Dessen Signaleingang (44) ist an den Ausgang (42) der Überwachungseinheit (31) angeschlossen. In dem Ausgangsverstärker (32) ist der Signaleingang (44) über einen Verstärker (45) mit der Basis eines Schalttransistors (46) verbunden. Der Schalttransistor (46) ist mit seinem Kollektor und seinem Emitter an die Pole einer Gleichspannungsquelle (47) angeschlossen. Diese dient auch zur Energieversorgung des Verstärkers (45). In den Stromkreis der Kollektor-Emitter-Strecke ist die Primärspule (48) einer induktiven Kopplung (49) geschaltet. Die Sekundärspule (50̸) der induktiven Kopplung (49) ist einerseits mit einem der Pole der Gleichspannungsquelle (47) und andererseits mit einem Signalausgang (59) verbunden. Weiterhin ist eine Gleichrichtdiode (52) zwischen der Sekundärspule (50̸) und dem Ausgang (51) zur Vermeidung von Rückkopplungen vorgesehen.

Die Anordnung ist so getroffen, daß die Kollektor-Emitter-Strecke des Schalttransistors (46) gesperrt ist, solange an der Basis kein Signal anliegt, und daß die Kollektor-Emitter-Strecke durch ein an der Basis anliegendes Signal durchgeschaltet wird und dann durch die Primärspule (48) der induktiven Kopplung (49) ein Strom fließt. Dadurch wird in der Sekundärspule (50̸) und somit am Ausgang des Ausgangsverstärkers eine Spannung erzeugt. Diese beträgt etwa 24 VDC und ist mit 30̸ mA belastbar.

Figur (8) zeigt ein Funktionsschaubild der zuvor erläuterten Positionsüberwachungseinheit, mit der ein Überwachungsbereich in zwei Stufen überwacht wird, beispielsweise um bei einem bestimmten Winkel ein Vorwarnsignal abzugeben, bevor beim Überschreiten des zulässigen Winkels eine Anlage beispielsweise abgeschaltet wird. Dazu werden die vom Drehmelder abgegebene Signale gleichzeitig zwei Überwachungseinheiten (31) zugeführt, die mit Hilfe der Codierschalter (38) unterschiedliche Überwachungsbereiche abdecken. In den Überwachungseinheiten (31) werden Ausgangssignale erzeugt, die an die ihnen zugeordneten Ausgangsverstärker (32) übermittelt werden, wo in der zuvor erläuterten Weise eine Ausgangspannung erzeugt wird, solange das sich zu überwachende Bauteil im eingestellten Überwachungsbereich befindet. Verläßt das Bauteil diesen Überwachungsbereich, so wird am Ausgang des Ausgangsverstärkers keine Spannung mehr erzeugt, so daß ein Schaltelement (52), beispielsweise ein Schütz, geschaltet und dadurch eine Warnvorrichtung betätigt oder eine Anlage abgeschaltet wird.

Figur (8) zeigt weiterhin, daß die von dem Drehmelder (1) abgegebenen Signale außerdem an eine Anzeigeeinrichtung (53), beispielsweise einen Computer weitergeleitet werden, wo die ermittelten Daten in bekannter Weise grafisch ausgewertet werden.

Figur (9) zeigt schematisch eine Positionsüberwachungseinrichtung, wie sie zur Überwachung einer Schiffsverladeeinrichtung (54) verwendet wird. Zu einer solchen Schiffsverladeeinrichtung (54) gehören eine um ihre Längsachse drehbare Säule (55), ein an diese Säule (55) gelenkig angeschlossener Innenarm (56) und ein an den Innenarm (56) gelenkig angeschlossener Außenarm (57). Der Innenarm (56) und der Außenarm (57) sind dabei in einer gemeinsamen vertikalen Ebene bewegbar. Entsprechend sind hier drei Drehmelder (1) vorgesehen, wobei der Drehmelder (1) zur Überwachung der Säule (55) entsprechend den in den Figuren (3a) und (3b) dargestellten Drehmeldern (1'') und die Drehmelder (1) zur Überwachung des Innenarms (56) bzw. des Außenarms (57) ensprechend dem in Figur (2) dargestellten Drehmelder (1') ausgebildet sind. Die Drehmelder (1) sind mit einer Steuerung (58) verbunden, zu der u.a. auch die Auswerteeinheit gehört. Die Steuerung (58) weist ein Bedienpult (58a) auf und ist einerseits mit Warneinrichtungen (59) und andererseits mit einem Hydrauliksystem (60̸) zur Betätigung einer hier nicht weiter dargestellten Trennkupplung, die den Außenarm (57) der Schiffsverladeeinrichtung (54) mit einem Anschlußstück beispielsweise eines Tankers verbindet, funktional verbunden. Außerdem ist die Steuerung (58) mit graphischen Darstellungsmitteln wie einem Monitor (61) und einem Drucker (62) verbunden.

Wie bereits eingangs erläutert worden ist, ist die separate Auswertung der Daten der drei vorhandenen Drehmelder mit erheblichen Nachteilen verbunden, so daß die Auswertung hier komplex erfolgt, also für die Feststellung eines etwaigen Alarmfalls die Daten der Drehmelder nicht separat, sondern in Abhängigkeit voneinander berücksichtigt werden. Die Auswertelogik für eine solche abhängige Auswertung ist in Figur (10̸) dargestellt, allerdings lediglich für eine einzige Abhängigkeit. Hier sollen der in Figur (10̸) oben dargestellte Drehmelder (1) zur Überwachung des Innenarms (56) und der unten dargestellte Drehmelder (1) zur Überwachung des Außenarms (57) sein. Jeder Signalausgang (30̸) des Drehmelders (1) für den Innenarm (56) ist mit einer separaten Überwachungseinheit (31) verbunden, so daß bei unterschiedlichen Winkelstellungen des Drehmelders (1) für den Innenarm (56) auch unterschiedliche Überwachungseinheiten (31) angesteuert werden. Die Signalausgänge (30̸) des Drehmelder (1) zur Überwachung des Außenarms (57) sind parallel mit allen Überwachungseinheiten (31) verbunden. Die Anordnung ist dabei so getroffen, daß Signale, die der Drehmelder (1) des Außenarms (57) abgibt, jeweils nur in der Überwachungseinheit (31) verarbeitet werden, die auch von dem Drehmelder (1) zur Überwachung des Innenarms (56) angesteuert wird. Hierzu sind die Überwachungsbereiche der einzelnen Überwachungseinheiten (31) unterschiedlich eingestellt. Für jede Winkelstellung des Innenarms (56) ergibt sich nämlich nur ein bestimmter Winkelbereich, in dem sich der Außenarm (57) bewegen darf, ohne daß Kollisionen mit dem Kai auftreten oder die Verbindung zwischen dem Anschlußende der Schiffsverladeeinrichtung (54) und einem Schiff zu stark beansprucht wird.

Die jeweils entstehenden Ausgangssignale werden in bekannter Weise dem Ausgangsverstärker (32) übermittelt dort und ausgewertet. Die von den Drehmeldern (1) abgegebenen Signale werden außerdem Digital/Analog-Wandlern (63) zugeführt, um beispielsweise optisch ausgewertet zu werden.

## Patentansprüche

1. Positionsüberwachungseinrichtung, insbesondere für eine Schiffsverladeeinrichtung, mit mindestens einem Drehmelder (1), der mit einer Auswerteeinheit verbindbar oder verbunden ist,
dadurch gekennzeichnet, daß zu dem Drehmelder (1) mindestens ein Sendeelement (2) und eine Mehrzahl von dem Sendeelement (2) zugeordneten Empfangselementen (10̸) gehören, daß das Sendeelement (2) um eine Achse (7) drehbar ist und daß das Sendeelement (2) in jeder Bewegungslage wenigstens einem Empfangselement (10̸) gegenüberliegt.

2. Überwachungseinrichtung nach Anspruch (1),
dadurch gekennzeichnet, daß das Sendelement (2) mit einem Pendel (12) drehverbunden ist.

3. Positionsüberwachungseinrichtung nach Anspruch (2),
dadurch gekennzeichnet, daß das Sendeelement (2) mit dem Pendel (12) drehfest verbunden ist.

4. Positionsüberwachungseinrichtung nach einem der Ansprüche (1) bis (3),
dadurch gekennzeichnet, daß das Sendeelement (2) entlang einer zu der Achse (7) konzentrischen Kreisbahn (8) bewegbar ist und die Empfangselemente (10̸) entlang eines zu der Achse (7) konzentrischen Kreisbogens (9) in gleichmäßigen Abständen angeordnet sind.

5. Positionsüberwachungseinrichtung nach einem der Ansprüche (1) bis (4),
dadurch gekennzeichnet, daß das Sendeelement (2) mit einem Getriebe verbunden ist.

6. Positionsüberwachungseinrichtung nach Anspruch (4),
dadurch gekennzeichnet, daß zu dem Getriebe (16) ein Hebelmechanismus gehört.

7. Positionsüberwachungseinrichtung nach Anspruch (6),
dadurch gekennzeichnet, daß der Hebelmechanismus als Gelenkparallelogramm (18) ausgebildet ist.

8. Positionsüberwachungseinrichtung nach einem der Ansprüche (5) bis (7),
dadurch gekennzeichnet, daß das Getriebe (16) eine Mehrzahl von miteinander in Eingriff stehenden Zahnrädern (18a) aufweist.

9. Positionsüberwachungseinrichtung nach einem der Ansprüche (5) bis (8),
dadurch gekennzeichnet, daß zu dem Getriebe (16) ein Kurbeltrieb (21) gehört, um eine geradlinige Bewegung in eine Drehbewegung umzusetzen.

10. Positionsüberwachungseinrichtung nach einem der Ansprüche (1) bis (9),
dadurch gekennzeichnet, daß der Drehmelder (1) ein Gehäuse (13) aufweist, in dem das Sendeelement (2) drehbar und die Empfangselemente (10̸) drehfest angeordnet sind.

11. Positionsüberwachungseinrichtung nach Anspruch (10̸) und einem der Ansprüche (5) bis (9),
dadurch gekennzeichnet, daß in dem Gehäuse (13) eine zur Achse (7) koaxiale Welle (14) drehbar angeordnet ist, daß die Welle (14) das Sendeelement (2) drehfest trägt und daß ein Ende der Welle (14) zur Verbindung mit dem Getriebe (16) aus dem Gehäuse (13) herausgeführt ist.

12. Positionsüberwachungseinrichtung nach einem der Ansprüche (1) bis (11),
dadurch gekennzeichnet, daß zu dem Drehmelder (1) weitere Sendeelemente (3, 4, 5) gehören, die mit dem vorhandenen Sendelement (2) drehfest verbunden sind.

13. Positionsüberwachungseinrichtung nach Anspruch (12),
dadurch gekennzeichnet, daß die weiteren Sendeelemente (3, 4, 5) mit Winkelversatz zu dem ersten Sendeelement (2) angeordnet sind.

14. Positionsüberwachungseinrichtung nach Anspruch (13),
dadurch gekennzeichnet, daß der Winkelversatz zwischen zwei Sendeelementen (2, 3, 4, 5) ein nicht ganzzahliges Vielfaches des Winkelversatzes zwischen zwei nebeneinander liegenden Empfangselementen (10̸) beträgt.

15. Positionsüberwachungseinrichtung nach Anspruch (14),
dadurch gekennzeichnet, daß sich der Winkelversatz zwischen zwei nebeneinander liegenden Sendeelementen (2, 3, 4, 5) als Differenz aus dem Maß des zu überwachenden Winkels und dem Quotient aus dem Maß des zu überwachenden Winkels und der Anzahl der im Bereich des zu überwachenden Winkels vorhandenen Empfangselemente (10̸) berechnet.

16. Positionsüberwachungseinrichtung nach einem der Ansprüche (1) bis (15),
dadurch gekennzeichnet, daß insgesamt 72 Empfangselemente (10̸) vorgesehen und entlang eines Kreisbogens (9) von 360̸° angeordnet sind und daß insgesamt zwei Sendeelemente (2, 3) vorgesehen sind und der Innenwinkel zwischen den Sendeelementen (2, 3) 177,5° beträgt.

17. Positionsüberwachungseinrichtung nach einem der Ansprüche (1) bis (15),
dadurch gekennzeichnet, daß insgesamt 72 Empfangselemente (10̸) vorgesehen und entlang eines Kreisbogens (9) von 360̸° angeordnet sind und daß insgesamt vier Sendeelemente (2, 3, 4, 5) vorgesehen sind und der Innenwinkel zwischen jeweils zwei benachbarten Sendeelementen (2, 3, 4, 5) 88,75° beträgt.

18. Positionsüberwachungseinrichtung nach einem der Ansprüche (12) bis (17),
dadurch gekennzeichnet, daß jedes Sendeelement (2, 3, 4, 5) einzeln zuschaltbar ist.

19. Positionsüberwachungseinrichtung nach einem der Ansprüche (1) bis (18),
dadurch gekennzeichnet, daß das Sendeelement (2) bzw. die Sendeelemente (2, 3, 4, 5) und die Empfangselemente (10̸) als optische Sende- und Empfangselemente ausgebildet sind.

20. Positionsüberwachungseinrichtung nach Anspruch (19),
dadurch gekennzeichnet, daß das Sendeelement (2) bzw. die Sendeelemente (2, 3, 4, 5) und die Empfangselemente (10̸) als Infrarotsensoren ausgebildet sind.

21. Positionsüberwachungseinrichtung nach einem der Ansprüche (1) bis (20̸),
dadurch gekennzeichnet, daß das Sendeelement (2) bzw. die Sendeelemente (2, 3, 4, 5) mit einem Funktionsfrequenzgenerator (26) verbunden ist bzw. sind und Sendeimpulse mit einer bestimmten Funktionsfrequenz abgibt bzw. abgeben.

22. Positionsüberwachungseinrichtung nach Anspruch (21),
dadurch gekennzeichnet, daß das Sendeelemente (2) bzw. die Sendelemente (2, 3, 4, 5) Sendeimpulse mit einer Funktionsfrequenz von 10̸0̸ Hz bis 1 kHz abgeben.

23. Positionsüberwachungseinrichtung nach einem der Ansprüche (1) bis (22),
dadurch gekennzeichnet, daß die Empfangselemente (10̸) einzeln zuschaltbar sind.

24. Funktionsüberwachungseinrichtung nach einem der Ansprüche (21) bis (23),
dadurch gekennzeichnet, daß jeweils das Sendeimpulse empfangende Empfangselement (10̸) Signale mit der Frequenz der empfangenden Sendeimpulse an die Auswerteeinheit übermittelt.

25. Positionsüberwachungseinrichtung nach Anspruch (24),
dadurch gekennzeichnet, daß zu der Auswerteeinheit eine Überwachungseinheit (31) mit einer Vergleichseinrichtung (36) gehört und die Vergleichseinrichtung (36) Ausgangssignale erzeugt, wenn die Frequenz der von den Empfangselementen (10̸) übermittelten Signale mit der Funktionsfrequenz flankensynchron ist.

26. Positionsüberwachungseinrichtung nach Anspruch (25),
dadurch gekennzeichnet, daß die Vergleichseinrichtung ein UND-Gatter (36) ist, das eingangsseitig einerseits mit der Ausgangsseite der Empfangselemente (10̸) und andererseits mit dem Funktionsfrequenzgenerator (26) verbunden ist.

27. Positionsüberwachungseinrichtung nach Anspruch (26),
dadurch gekennzeichnet, daß zwischen den Funktionsfrequenzgenerator (26) und das UND-Gatter (36) ein dynamischer Filter (40̸) geschaltet ist.

28. Positionsüberwachungseinrichtung nach einem der Ansprüche (25) bis (27),
dadurch gekennzeichnet, daß die Verbindung jedes einzelnen Empfangselements (10̸) mit der Vergleichseinrichtung (36) durch einen Codierschalter (38) unterbrochen werden kann.

29. Positionsüberwachungseinrichtung nach einem der Ansprüche (25) bis (28),
dadurch gekennzeichnet, daß die Vergleichseinrichtung (36) ausgangsseitig mit einem Ausgangsverstärker (32) der Auswerteeinheit verbunden ist und der Ausgangsverstärker (32) eine Ausgangsspannung erzeugt, solange er von dem Vergleichselement (36) Signale erhält.

30. Positionsüberwachungseinrichtung nach Anspruch (29),
dadurch gekennzeichnet, daß zu dem Ausgangsverstärker (32) ein Schaltelement (46) gehört, das eingangsseitig mit der Ausgangsseite der Vergleichseinrichtung (36) verbunden ist und einen Stromkreis für die Primärseite einer induktiven Kopplung (49) steuert, deren Sekundärseite die Ausgangsspannung des Ausgangsverstärkers (32) erzeugt.

31. Positionsüberwachungseinrichtung nach Anspruch (30̸),
dadurch gekennzeichnet, daß das Schaltelement ein Schalttransistor (46) ist.

32. Positionsüberwachungseinrichtung nach einem der Ansprüche (24) bis (31),
dadurch gekennzeichnet, daß eine weitere Auswerteeinheit vorgesehen ist, die parallel zu der vorhandenen Auswerteeinheit mit den Empfangselementen (10̸) verbunden ist.

33. Positionsüberwachungseinrichtung nach einem der Ansprüche (24) bis (32),
dadurch gekennzeichnet, daß neben dem vorhandenen Drehmelder (1) ein zweiter Drehmelder (1) vorgesehen ist, daß jeder Signalausgang (30̸) des ersten Drehmelders (1) mit einem Signaleingang einer ihm zugeordneten ersten Überwachungseinheit (31) verbunden ist, daß die Signalausgänge (30̸) des zweiten Drehmelders (1) mit jeder ersten Überwachungseinheit (31) in Parallelschaltung verbunden sind und daß die von dem zweiten Drehmelder (1) abgegebenen Signale jeweils nur in derjenigen ersten Überwachungseinheit (31) ausgewertet werden, die auch durch den ersten Drehmelder (1) angesteuert ist.

34. Positionsüberwachungseinheit nach Anspruch (33),
dadurch gekennzeichnet, daß ein dritter Drehmelder (1) vorgesehen ist, daß die ersten Überwachungseinheiten (31) für jede mögliche Winkelstellung des zweiten Drehmelders (1) einen eigenen Signalausgang aufweisen und jeder Signalausgang mit einer weiteren, ihm zugeordneten zweiten Überwachungseinheit (31) verbunden ist, daß die Signalausgänge (30̸) des dritten Drehmelders (1) mit jeder zweiten Überwachungseinheit (31) in Parallelschaltung verbunden sind und daß die von dem dritten Drehmelder (1) abgegebenen Signale jeweils nur in derjenigen zweiten Überwachungseinheit (31) ausgewertet werden, die auch durch die ersten Überwachungseinheiten (31) angesteuert sind.
